# EUROPÄISCHE PATENTANMELDUNG

(11) **EP 1 049 313 A1**
(43) Veröffentlichungstag der Anmeldung: **02.11.2000**
(21) Anmeldenummer: 00103750.6
(22) Anmeldetag: 23.02.2000
(51) Int. Cl.: H04M 11/02

(54) **Türsprechanlage mit einer Türstation und mehreren Wohnungsstationen**

(30) Priorität: 28.04.1999 DE 19919266
(71) Anmelder: Ritto - Werk Loh GmbH & Co. KG, 35708 Haiger (DE)
(72) Erfinder: Braun, Wilfried, 35716 Dietzhölztal-Ewersbach (DE)
(74) Vertreter: Fleck, Hermann-Josef, Dr.-Ing.

(57) **Zusammenfassung**

Die Erfindung betrifft eine Türsprechanlage mit einer Türstation und mehreren Wohnungsstationen, bei der an der Türstation pro Wohnungsstation eine Klingeltaste zur Einleitung eines individuellen Rufsignals vorgesehen ist und die Wohnungsstationen mit einer auf das zugeordnete Rufsignal ausgelegten Empfangseinrichtung ausgestattet sind und bei der beim Melden der gerufenen Wohnungsstation über eine Busleitung eine Sprechverbindung oder Sprech- und Videoverbindung zwischen der gerufenen Wohnungsstation und der Türstation hergestellt wird. Mit einer Gruppeneinteilung der Wohnungsstationen und dem Einsatz unterschiedlicher Rufsignale in Teilbereichen der Anlage sowie Umwandlungseinrichtungen in den Übergangsbereichen der Anlage wird eine Türsprechanlage geschaffen, die eine Vielzahl von Wohnungsstationen aufweisen kann und dennoch eine betriebssichere Übertragung der Rufsignale gewährleistet.

## Beschreibung

Die Erfindung betrifft eine Türsprechanlage mit einer Türstation und mehreren Wohnungsstationen, bei der an der Türstation pro Wohnungsstation eine Klingeltaste zur Einleitung eines individuellen Rufsignals vorgesehen ist und die Wohnungsstationen mit einer auf das zugeordnete Rufsignal ausgelegten Empfangseinrichtung ausgestattet sind und bei der beim Melden der gerufenen Wohnungsstation über eine Busleitung eine Sprechverbindung oder Sprech- und Videoverbindung zwischen der gerufenen Wohnungsstation und der Türstation hergestellt wird.

Bei den bekannten Türsprechanlagen dieser Art wird die Busleitung zur Übertragung der individuellen Rufsignale, zur Gleichstrom-Speisung der Wohnungsstationen und zur Übertragung zusätzlicher Steuerbefehle verwendet. Wie die DE 195 48 744 C2 und die DE 196 44 735 A1 zeigen, kann das individuelle Rufsignal auf unterschiedliche Weise gebildet werden.

Es kann durch codierte Pegeländerung der für die Speisung verwendeten Gleichspannung gebildet oder durch codierte Wechselstromsignale der Gleichstromspannung überlagert werden. In jedem Fall ist diese Art der Rufsignal-Übertragung durch den Leitungswiderstand der Busleitung und durch die Anzahl der an die Busleitung anschaltbaren Wohnungsstationen begrenzt.

Es ist Aufgabe der Erfindung, eine Türsprechanlage der eingangs erwähnten Art so zu erweitern, dass die Anzahl der einzubeziehenden Wohnungsstationen wesentlich erhöht werden kann, ohne die Sicherheit der Rufsignal-Übertragung zu beeinträchtigen und ohne den zusätzlichen Leitungsaufwand merklich zu erhöhen.

Diese Aufgabe wird nach der Erfindung dadurch gelöst, dass die Wohnungsstationen in Gruppen unterteilt und über Gruppenbusleitungen miteinander und einer zugeordneten Gruppensteuereinrichtung verbunden sind, dass die Gruppensteuereinrichtungen über einen Datenkanal mit einer Zentralsteuereinrichtung verbunden sind, an der die Türstation angeschaltet ist, dass das von der Türstation abgegebene Rufsignal in der Zentralsteuereinrichtung aufgenommen und in eine zugeordnete, digitale mehrstellige Wahlinformation umgewandelt und über den Datenkanal an die Gruppensteuereinrichtung übertragen wird, dass in der für diese Wahlinformationen zuständigen Gruppensteuereinrichtung diese Wahlinformation in das zugeordnete, individuelle Rufsignal zurückverwandelt und über die zugeordnete Gruppenbusleitung zu der gerufenen Wohnungsstation übertragen wird und dass beim Melden der gerufenen Wohnungsstation über die Gruppenbusleitung, die beteiligte Gruppensteuereinrichtung, die Busleitung der Türsprechanlage und die Zentralsteuereinrichtung eine Sprechverbindung oder eine Sprech- und Videoverbindung zwischen der gerufenen Wohnungsstation und der Türstation hergestellt wird.

Bei dieser Ausgestaltung bleibt die individuelle Rufsignal-Übertragung zwischen der Türstation und der Zentralsteuereinrichtung sowie zwischen der beteiligten Gruppensteuereinrichtung und der gerufenen Wohnungsstation unverändert. Zwischen der Zentralsteuereinrichtung und den Gruppensteuereinrichtungen wird jedoch auf eine bekannte digitale, mehrstellige Wahlinformation zurück gegriffen, die nicht nur einfach darstellbar, sondern auch über größere Entfernungen sicher übertragbar ist. Die Gruppen von Wohnungsstationen bilden mit ihren Gruppenbusleitungen kleinere Teilbussysteme, die über die Gruppensteuereinrichtungen mit der Zentralsteuereinrichtung zu der Türsprechanlage zusammengefaßt sind. Zu beachten ist dabei, dass den individuellen Rufsignalen bestimmte digitale, mehrstellige Wahlinformationen zugeordnet sind, die bei der Umwandlung in der Zentralsteuereinrichtung und den Gruppensteuereinrichtungen zu berücksichtigen sind. Die Gruppensteuereinrichtungen werden über den Datenkanal parallel angesteuert und erkennen an der ankommenden Wahlinformation, ob die gerufene Wohnungsstation zu ihrer Gruppe oder nicht zu ihrer Gruppe von Wohnungsstationen gehört. Abhängig davon beteiligt sich die Gruppensteuereinrichtung am weiteren Verbindungsaufbau oder bleibt inaktiv.

Zur Herstellung der Sprechverbindung oder der Sprech- und Videoverbindung ist nach einer Ausgestaltung vorgesehen, dass die Zentralsteuereinrichtung und die Gruppensteuereinrichtungen Schaltmittel aufweisen, die die Anschaltung an die Busleitung übernehmen, wobei in der Zentralsteuereinrichtung das Schaltmittel die Busleitung mit der zur Türstation führenden Türstations-Busleitung verbindet und wobei die beteiligte Gruppensteuereinrichtung mit dem Schaltmittel die zugeordnete Gruppenbusleitung mit der Busleitung verbindet.

Für die Umwandlung der Rufsignale in die Wahlinformationen ist in der Zentralsteuereinrichtung ein erster Mikrorechner vorgesehen, der das von der Türstation kommende, individuelle Rufsignal aufnimmt, in die zugeordnete digitale, mehrstellige Wahlinformation umwandelt und an einen zweiten Mikrorechner weiterleitet. Der zweite Mikrorechner speist diese auf den Datenkanal ein.

Die Umwandlung der Signale in den Gruppensteuereinrichtungen erfolgt nach einer Ausgestaltung in der Weise, dass in den Gruppensteuereinrichtungen ein erster Mikrorechner die vom Datenkanal kommende digitale, mehrstellige Wahlinformation aufnimmt, auswertet, in das zugeordnete individuelle Rufsignal umwandelt und dass ein zweiter Mikrorechner die vom ersten Mikrorechner aufgenommene Wahlinformation auf die zugeordnete Gruppenbusleitung einspeist, wobei die Umwandlung und Einspeisung nur in der Gruppensteuereinrichtung vorgenommen wird, an der die gerufene Wohnungsstation angeschaltet ist.

Ist nach einer Weiterbildung vorgesehen, dass jeder Gruppensteuereinrichtung eine Etagen-Türstation zugeordnet ist, von der aus individuelle Rufsignale für die Wohnungsstationen der zugeordneten Gruppe abgebbar und über die zugeordnete Gruppensteuereinrichtung auf die Gruppenbusleitung übertragbar sind, dann ergibt sich eine neue Betriebsvariante der Türsprechanlage. Die Teilbussysteme mit den Gruppensteuereinrichtungen und Gruppenbusleitungen können mit der Gruppe der beteiligten Wohnungsstationen Teil-Türsprechanlagen bilden, die mit Hilfe der Etagen-Türstationen unabhängig voneinander betrieben werden können. Dabei können die unveränderten, individuellen Rufsignale verwendet werden, wenn diese von der Etagen-Türstation erzeugt werden. Die Gruppe von Wohnungsstationen ist nicht auf eine Etage eines Gebäudes beschränkt. Es können auch mehrere Gebäude in eine Türsprechanlage einbezogen werden, wobei die Wohnungsstationen der einzelnen Gebäude die Gruppen bilden.

Für die Speisung der Wohnungsstationen sieht eine Ausgestaltung vor, dass jeder Gruppensteuereinrichtung ein Netzgerät zugeordnet ist, das über die zugeordnete Gruppenbusleitung auch die Gleichstrom-Speisung für die Wohnungsstationen der Gruppe und der Etagen-Türstation übernimmt.

Die Speisung der Türstation ist so gelöst, dass der Zentralsteuereinrichtung ein Netzgerät zugeordnet ist, das über die Türstationsbusleitung auch die Gleichstrom-Speisung für die Türstation übernimmt.

Bei großen Anlagen ist mehr oder weniger oft erwünscht, einen zentralen Bedienungsplatz vorzusehen, der als Vermittlung zwischen der Türstation und den Wohnungsstationen in Funktion tritt.

Für die Einbeziehung eines derartigen Bedienungsplatzes ist nach einer Ausgestaltung vorgesehen, dass zusätzlich eine Bedienungsplatz-Steuereinrichtung vorgesehen ist, die mit der Busleitung dem Datenkanal und der Zentralsteuereinrichtung gekoppelt ist, wobei der zweite Mikrorechner der Zentralsteuereinrichtung bei besetztem Bedienungsplatz mit der Bedienungsplatz-Steuereinrichtung zum Empfang der von der Zentralsteuereinrichtung umgewandelten Wahlinformation verbunden ist und wobei bei nicht besetztem Bedienungsplatz der zweite Mikrorechner der Zentralsteuereinrichtung direkt mit dem Datenkanal verbunden ist.

Mit dem Melden der Bedienungsplatz-Steuereinrichtung wird nach Empfang einer Wahlinformation eine Sprechverbindung oder eine Sprech- oder Videoverbindung zwischen Türstation und Bedienungsplatz hergestellt. Mit der aufgenommenen Wahlinformation stellt die Bedienungsplatz-Steuereinrichtung eine Internverbindung zur gerufenen Wohnungsstation her. Nach dem Melden der gerufenen Wohnungsstation veranlaßt die Bedienungsplatz-Steuereinrichtung die Herstellung der Sprechverbindung oder der Sprech- und Videoverbindung zwischen der gerufenen Wohnungsstation und der Türstation durch Ansteuerung eines Schaltmittels in der Zentralsteuereinrichtung, welches die Anschaltung der Türstation an die Busleitung ausführt.

Die Erfindung wird anhand von in der Zeichnung dargestellten Ausführungsbeispielen näher erläutert. Es zeigen:
- Fig. 1: ein Blockschaltbild einer Türsprechanlage mit Gruppen von Wohnungsstationen und
- Fig. 2: ein Blockschaltbild einer Türsprechanlage mit Gruppen von Wohnungsstationen und einem zentrischen Bedienungsplatz.

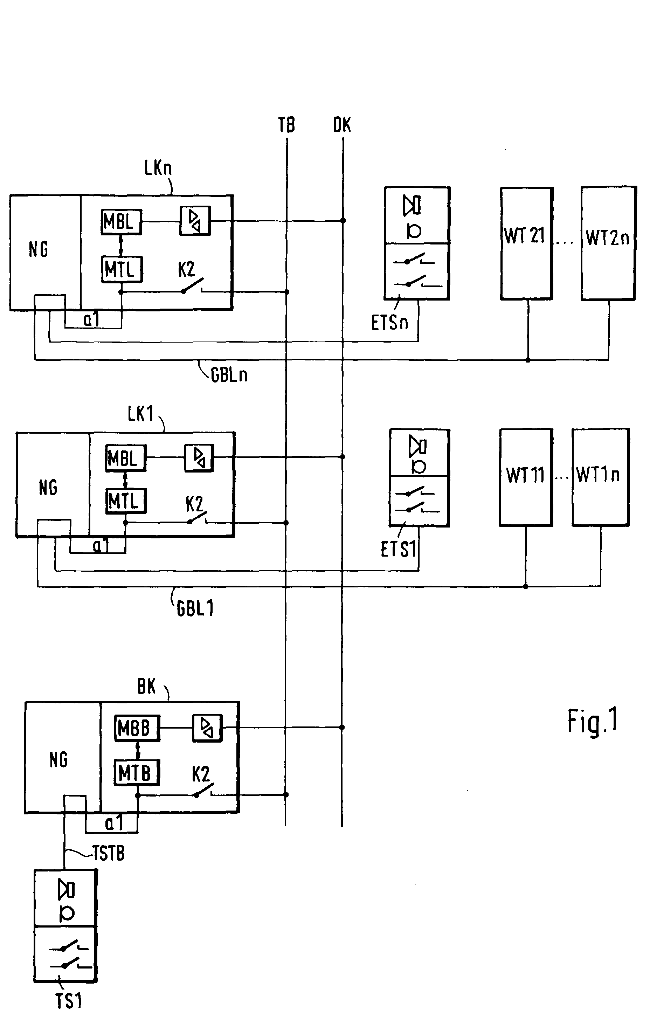

Das Blockschaltbild nach Fig. 1 zeigt den grundsätzlichen Aufbau einer Türsprechanlage mit einer Türstation TS1 und einer Vielzahl von Wohnungsstationen, die in Gruppen unterteilt sind, wie mit den Wohnungsstationen WT11 bis WT1n und WT21 bis WT2n gezeigt ist. Diese Wohnungsstationen stehen nicht wie bei bekannten modernen Türsprechanlagen über die Busleitung TB mit der Türstation TS1 in direkter Verbindung, so dass die an der Türstation TS1 abgegebenen individuellen Rufsignale nicht zu der gerufenen Wohnungsstation gelangen können.

Wird an der Türstation TS1 eine Klingeltaste betätigt, dann wird ein zugeordnetes individuelles Rufsignal erzeugt und über eine Türstationsbusleitung TSTB zu einer Zentralsteuereinrichtung BK übertragen. Dort wird das Rufsignal von einem ersten Mikrorechner MTB aufgenommen, in eine zugeordnete digitale, mehrstellige Wahlinformation umgewandelt und an einen zweiten Mikrorechner MBB weitergeleitet, der das empfangene Rufsignal auf einen Datenkanal DK einspeist. An dem Datenkanal DK sind Gruppensteuereinrichtungen LK1 und LKn angeschaltet, die jeweils einen ersten Mikrorechner MBL aufweisen, der die Wahlinformation des Datenkanals DK aufnimmt und daraus entnimmt, ob die zugeordnete Wohnungsstation, z.B. WT2n, zur eigenen oder einer fremden Gruppe gehört. Ist die Wahlinformation für eine Wohnungsstation einer fremden Gruppe gedacht, dann bleibt die Gruppensteuereinrichtung, z.B. LK1, inaktiv. In der betroffenen Gruppe LKn überträgt der erste Mikrorechner MBL die ins zugeordnete individuelle Prüfsignal umgewandelte Wahlinformation an den zweiten Mikrorechner MTL weiterleitet, der diese auf die Gruppenbusleitung GBLn einspeist. In der gerufenen Wohnungsstation WT2n wird das Rufsignal erkannt und ein akustisches Rufsignal erzeugt.

Meldet sich die gerufene Wohnungsstation WT2n, z.B. durch Abheben des Handapparates, dann wird in der Gruppensteuereinrichtung LKn ein Schaltmittel K2 erregt, das die Gruppenbusleitung GBLn mit des Busleitung TB der Anlage verbindet (Leitung a1). Auch in der Zentralsteuereinrichtung BK erfolgt ein ähnlicher Anschaltvorgang zwischen der Busleitung TB und der Türstationsbusleitung TSTB, so dass zwischen der gerufenen Wohnungsstation WT2n und der Türstation TS1 eine Sprechverbindung oder eine Sprech- und Videoverbindung hergestellt ist. Die Anschaltung der Sprech- und Hörkreise sowie der Bildaufnahme- und Bildwiedergabegeräte erfolgt in bekannter Weise beim Melden der gerufenen Wohnungsstation WT2n.

Zwischen der Türstation TS1 und der Zentralsteuereinrichtung BK sowie zwischen der Gruppensteuereinrichtung LK1 bzw. LKn und den Wohnungsstationen WT11 bis WT1n bzw. WT21 bis WT2n erfolgt die Übertragung der individuellen Rufsignale unverändert mit der gewählten Gleichstrom- oder WechselstromCodierung. Zwischen der Zentralsteuereinrichtung BK und den Gruppensteuereinrichtungen LK1, LKn wird ein robustes, betriebssicheres digitales, mehrstelliges Wahlverfahren eingesetzt, so dass eine Vielzahl von Gruppen mit Wohnungsstationen bedient werden kann.

Jeder Gruppensteuereinrichtung LK1 und LKn ist ein Netzgerät NG zugeordnet, das nicht nur die Stromversorgung der Gruppensteuereinrichtung LK1 bzw. LKn, sondern auch die Gleichstromspeisung der angeschlossenen Wohnungsstationen WT11 bis WT1n bzw. WT21 bis WT2n über die Gruppenbusleitung GBL1 bzw. GBLn, sowie falls vorhanden, die Gleichstromspeisung der Etagentürstation ETS1 bzw. ETSn übernimmt. Auch der Zentralsteuereinrichtung BK ist ein Netzgerät NG zugeordnet, das nicht nur die Stromversorgung der Zentralsteuereinrichtung BK mit den Mikrorechnern MTB und MBB, sondern auch die Gleichstromspeisung der Türstation TS1 über die Türstationsbusleitung TSTB übernimmt.

Sind die Wohnungsstationen WT11 bis WT1n bzw. WT21 bis WT2n etagenweise zu Gruppen zusammengefaßt, dann kann jeder Etage eine Etagen-Türstation ETS1 bzw. ETSn zugeordnet werden, deren Stationsbusleitung in der zugeordneten Gruppensteuereinrichtung LK1 bzw. LKn mit der zugehörigen Gruppenbusleitung GBL1 bzw. GBLn verbunden ist. Von der Etagen-Türstation ETS1 bzw. ETSn aus kann jede beliebige Wohnungsstation WT11 bis WT1n bzw. WT21 bis WT2n der Gruppe direkt mit dem individuellen Rufsignal gerufen werden. Die mit den Etagen-Türstationen ETS1 bzw. ETSn versehenen Gruppen bilden im Gesamtsystem eine Art Teil-Türsprechanlagen, die unabhängig von der übrigen Türsprechanlage genutzt werden können.

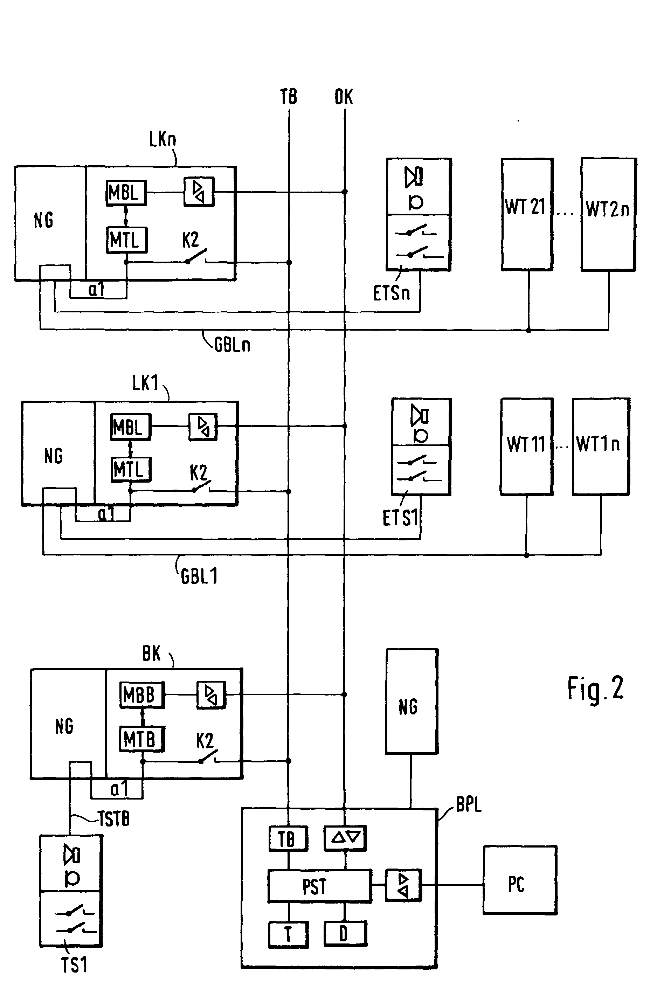

Wie die Fig. 2 erkennen läßt, kann die Türsprechanlage nach Fig. 1 mit einem zentralen Bedienungsplatz ausgestattet werden, dem eine BedienungsplatzSteuereinrichtung BPL zugeordnet ist. Ist dieser Bedienungsplatz besetzt, dann gelangt jeder Anruf der Türstation TS1 als Wahlinformation vom zweiten Mikrorechner MBB der Zentralsteuereinrichtung BK zu einem Mikrorechner PST der Bedienungsplatz-Steuereinrichtung BPL. Dabei kann die Wahlinformation über ein Display D oder einen PC angezeigt werden.

Über eine Tastatur T kann die Herstellung einer Sprechverbindung oder einer Sprech- und Videoverbindung zur Türstation TS1 eingeleitet werden. Die Weitervermittlung des Anrufes übernimmt die Bedienungsplatz-Steuereinrichtung BPL, in dem sie die erhaltene Wahlinformation über den Datenkanal DK zum Aufbau einer Internverbindung zur gerufenen Wohnungsstation verwendet. Nach dem Melden der gerufenen Wohnungsstation kann sich der Bedienungsplatz ausklinken und die Herstellung einer Sprechverbindung oder einer Sprech- und

Videoverbindung zwischen gerufener Wohnungsstation und Türstation TS1 freigeben.

## Patentansprüche

1. Türsprechanlage mit einer Türstation und mehreren Wohnungsstationen, bei der an der Türstation pro Wohnungsstation eine Klingeltaste zur Einleitung eines individuellen Rufsignals vorgesehen ist und die Wohnungsstationen mit einer auf das zugeordnete Rufsignal ausgelegten Empfangseinrichtung ausgestattet sind und bei der beim Melden der gerufenen Wohnungsstation über eine Busleitung eine Sprechverbindung oder Sprech- und Videoverbindung zwischen der gerufenen Wohnungsstation und der Türstation hergestellt wird,
dadurch gekennzeichnet,
dass die Wohnungsstationen (WT11 bis WT1n; WT21 bis WT2n) in Gruppen unterteilt und über Gruppenbusleitungen (GBL1, GBLn) miteinander und einer zugeordneten Gruppensteuereinrichtung (LK1, LKn) verbunden sind,
dass die Gruppensteuereinrichtungen (LK1, LKn) über einen Datenkanal (DK) mit einer Zentralsteuereinrichtung (BK) verbunden sind, an der die Türstation (TS1) angeschaltet ist,
dass das von der Türstation (TS1) abgegebene Rufsignal in der Zentralsteuereinrichtung (BK) aufgenommen und in eine zugeordnete, digitale mehrstellige Wahlinformation umgewandelt und über den Datenkanal (DK) an die Gruppensteuereinrichtung (LK1, LKn) übertragen wird,
dass in der für diese Wahlinformationen zuständigen Gruppensteuereinrichtung (z.B. LKn) diese Wahlinformation in das zugeordnete, individuelle Rufsignal umgesetzt und über die zugeordnete Gruppenbusleitung (GBLn) zu der gerufenen Wohnungsstation (z.B. WT2n) übertragen wird und
dass beim Melden der gerufenen Wohnungsstation (z.B. WT2n) über die Gruppenbusleitung (GBLn), die beteiligte Gruppensteuereinrichtung (LKn), die Busleitung (TB) der Türsprechanlage und die Zentralsteuereinrichtung (BK) eine Sprechverbindung oder eine Sprech- und Videoverbindung zwischen der gerufenen Wohnungsstation (z.B. WT2n) und der Türstation (TS1) hergestellt wird.

2. Türsprechanlage nach Anspruch 1,
dadurch gekennzeichnet,
dass die Zentralsteuereinrichtung (BK) und die Gruppensteuereinrichtungen (LK1, LKn) Schaltmittel (K2) aufweisen, die die Anschaltung an die Busleitung (TB) übernehmen, wobei in der Zentralsteuereinrichtung (BK) das Schaltmittel (K2) die Busleitung (TB) mit der zur Türstation (TS1) führenden Türstations-Busleitung (TSTB) verbindet und wobei die beteiligte Gruppensteuereinrichtung (z.B. LK2) mit dem Schaltmittel (K2) die zugeordnete Gruppenbusleitung (z.B. GBLn) mit der Busleitung (TB) verbindet.

3. Türsprechanlage nach Anspruch 1 oder 2,
dadurch gekennzeichnet,
dass in der Zentralsteuereinrichtung (BK) ein erster Mikrorechner (MTB) das von der Türstation (TS1) kommende, individuelle Rufsignal aufnimmt und an einen zweiten Mikrorechner (MBB) weiterleitet und
dass der zweite Mikrorechner (MBB) das vom ersten Mikrorechner (MTB) übernommene Rufsignal in die zugeordnete digitale, mehrstellige Wahlinformation umwandelt und auf den Datenkanal (DK) einspeist.

4. Türsprechanlage nach einem der Ansprüche 1 bis 3,
dadurch gekennzeichnet,
dass in den Gruppensteuereinrichtungen (LK1, LKn) ein erster Mikrorechner (MBL) die vom Datenkanal (DK) kommende digitale, mehrstellige Wahlinformation aufnimmt und auswertet und
dass ein zweiter Mikrorechner (MTL) die vom ersten Mikrorechner (MBL) aufgenommene Wahlinformation in das zugeordnete individuelle Rufsignal umwandelt und auf die zugeordnete Gruppenbusleitung (GBL1, GBLn) einspeist, wobei die Umwandlung und Einspeisung nur in der Gruppensteuereinrichtung (z.B. LKn) vorgenommen wird, an der die gerufene Wohnungsstation (z.B. WT2n) angeschaltet ist.

5. Türsprechanlage nach einem der Ansprüche 1 bis 4,
dadurch gekennzeichnet,
dass jeder Gruppensteuereinrichtung (LK1, LKn) eine Etagen-Türstation (ETS1, ETSn) zugeordnet ist, von der aus individuelle Rufsignale für die Wohnungsstationen (WT11 bis WT1n; WT21 bis WT2n) der zugeordneten Gruppe abgebbar und über die zugeordnete Gruppensteuereinrichtung (LK1, LKn) auf die Gruppenbusleitung (GBL1, GBLn) übertragbar sind.

6. Türsprechanlage nach einem der Ansprüche 1 bis 5,
dadurch gekennzeichnet,
dass jeder Gruppensteuereinrichtung (LK1, LKn) ein Netzgerät (NG) zugeordnet ist, das über die zugeordnete Gruppenbusleitung (GBL1, GBLn) auch die Gleichstrom-Speisung für die Wohnungsstationen (WT11 bis WT1n; WT21 bis WT2n) der Gruppe und der Etagen-Türstation (ETS1, ETSn) übernimmt.

7. Türsprechanlage nach einem der Ansprüche 1 bis 6,
dadurch gekennzeichnet,
dass der Zentralsteuereinrichtung (BK) ein Netzgerät (NG) zugeordnet ist, das über die Türstationsbusleitung (TSTB) auch die Gleichstrom-Speisung für die Türstation (TS1) übernimmt.

8. Türsprechanlage nach einem der Ansprüche 1 bis 7,
dadurch gekennzeichnet,
dass zusätzlich eine Bedienungsplatz-Steuereinrichtung (BPL) vorgesehen ist, die mit der Busleitung (TB) dem Datenkanal (DK) und der Zentralsteuereinrichtung (BK) gekoppelt ist, wobei der zweite Mikrorechner (MBB) der Zentralsteuereinrichtung (BK) bei besetztem Bedienungsplatz mit der Bedienungsplatz-Steuereinrichtung (BPL) zum Empfang der von der Zentralsteuereinrichtung (BK) umgewandelten Wahlinformation verbunden ist und wobei bei nicht besetztem Bedienungsplatz der zweite Mikrorechner (MBB) der Zentralsteuereinrichtung (BK) direkt mit dem Datenkanal (DK) verbunden ist.

9. Türsprechanlage nach Anspruch 8,
dadurch gekennzeichnet,
dass mit dem Melden der Bedienungsplatz-Steuereinrichtung (BPL) nach Empfang einer Wahlinformation eine Sprechverbindung oder eine Sprech- und Videoverbindung zwischen Türstation (TS1) und Bedienungsplatz über die Zentralsteuereinrichtung (BK) hergestellt wird.

10. Türsprechanlage nach Anspruch 8 oder 9,
dadurch gekennzeichnet,
dass mit der aufgenommenen Wahlinformation von der BedienungsplatzSteuereinrichtung (BPL) aus eine Internverbindung zur gerufenen Wohnungsstation (z.B. WT2n) herstellbar ist, und
dass nach dem Melden der gerufenen Wohnungsstation (z.B. WT2n) die Bedienungsplatz-Steuereinrichtung (BPL) die Herstellung der Sprechverbindung oder der Sprech- und Videoverbindung zwischen gerufener Wohnungsstation (z.B. WT2n) und der Türstation (TS1) durch Ansteuerung des Schaltmittels (K2) in der Zentralsteuereinrichtung (BK) freigibt.
